Europäisches Patentamt

European Patent Office

Office européen des brevets

(11) Publication number: **0 123 298**
**B1**

## (12) EUROPEAN PATENT SPECIFICATION

(45) Date of publication of patent specification: **22.06.88**

(21) Application number: **84104480.3**

(22) Date of filing: **19.04.84**

(51) Int. Cl.⁴: **B 60 B 33/00**

(54) **Two part wheel bracket assembly and a method of making it.**

(30) Priority: **26.04.83 US 488863**

(43) Date of publication of application:
**31.10.84 Bulletin 84/44**

(45) Publication of the grant of the patent:
**22.06.88 Bulletin 88/25**

(84) Designated Contracting States:
**DE FR GB**

(56) References cited:
**CH-A- 445 763**
**FR-A-1 312 550**
**US-A-1 836 246**
**US-A-2 184 038**
**US-A-2 304 378**

(73) Proprietor: **STANDEX INTERNATIONAL CORPORATION**
**6 Manor Parkway**
**Salem New Hampshire 03079 (US)**

(72) Inventor: **Black, John William**
**5281 Walnut Grove**
**Hickory Corners, Michigan (US)**

(74) Representative: **Liebau, Gerhard, Dipl.-Ing.**
**Birkenstrasse 39**
**D-8900 Augsburg 22 (DE)**

## Description

The invention relates to a method of making a wheel bracket assembly as defined in the prior art portion of the annexed claim 1. The invention further relates to a wheel bracket assembly in accordance with the prior art portion of the annexed claim 12.

Wheel bracket assemblies, which include a wheel bracket and a wheel rotatably supported on the bracket, are utilized in many applications, for example on shopping carts. In applications of this type, the wheel bracket assembly is frequently subjected to rough treatment and therefore must be durable and reliable. However, in industries which are highly competitive it is also important that the wheel bracket assembly be relatively inexpensive in order to minimize the overall cost of the final product.

One conventional wheel bracket assembly used in applications of this type includes a U-shaped horn with the wheel rotatably supported between its legs, and a pin which is riveted in an opening in the bight of the horn and has transverse holes drilled therethrough (see Figure 14). Although this conventional arrangement has been adequate for its intended purposes, it has not been satisfactory in all respects. In particular, several separate manufacturing steps are required to fabricate the wheel bracket, thus making the wheel bracket assembly relatively expensive. Further, the connection between the pin and horn is subjected to relatively large stresses and frequently tends to loosen over a period of time.

A further consideration is that it is usually desirable for a wheel bracket assembly of the foregoing type to have a small amount of pivoting and shockabsorbing capability when mounted on a shopping cart or other device, in order to minimize the stresses applied to the bearings. However, conventional arrangements which provide limited pivoting and/or shock-absorbing capability typically involve increased structural complexity of the wheel bracket assembly and thus an increased number of manufacturing steps to fabricate the wheel bracket assembly.

A further consideration is that, although the bearing in wheel bracket assemblies of the foregoing type are typically designed so that the lubrication applied to the bearings at the factory will last the useful lifetime of the device, situations sometimes arise in which additional lubrication is necessary. In conventional wheel bracket assemblies, further lubrication has typically required that the wheel bracket assembly be disassembled, the wheel lubricated, and, the wheel bracket assembly then reassembled. This is a relatively expensive procedure, and its cost can frequently approach or exceed the cost of a new wheel bracket assembly thus making relubrication economically impractical.

A method for making a wheel bracket assembly is known in accordance with the prior art portion of claim 1 (US-A-2 304 378). This known wheel bracket assembly comprises two bracket parts and an axle which extends through the bracket parts and has a nut threadybly engaging each end. Each bracket part is also welded to two shells, and it is these welds which prevent relative rotation of the bracket parts. If there was nothing welded to the upper ends of the bracket parts, it would be possible to manually rotate the bracket part about the axle relative to the bracket part. Tightening the nuts on the axle will produce additional friction which resists relative rotation of the bracket parts, but this friction does not positively prevent relative rotation. This known assembly includes many separate parts. In particular, it includes a wheel, an axle, two nuts and a washer provided on the axle, two bracket parts, two shell parts, two bearing assemblies, and a stem. Each of these structural parts must be fabricated separately, which involves a significant amount of effort and cost. Further, assembling the known assembly is a relatively complex and time consuming operation, because the shells must first be placed in position around the bearings and must then be held in position while the bracket parts are placed in position and welded to the shells. Then, the wheel must be placed between the bracket parts and aligned with the openings in the bracket parts, the axle must be inserted through the aligned openings in the wheel and bracket parts, and the nuts must be threaded onto the respective ends of the axle and then snugly tightened with an appropriate tool. A further disadvantage is that, after assembly, the nuts on the axle may have a tendency to work loose during use, as a result of which the wheel may drop off the bracket and the nuts and/or axle may be lost.

Relevant background art is disclosed in FR-A-1 312 550, US-A-2 184 038, US-A-1 836 246 and CH-A-445 763.

Accordingly, it is the object of the invention to provide a method for making a wheel bracket assembly, which enables the fabrication of the wheel bracket assembly with a minimum of steps, a minimum of parts and a minimum amount of labour.

According to the invention the foregoing objects are achieved by a method according to claim 1 and a wheel bracket assembly according to claim 12.

A further object of the invention is to provide a wheel bracket assembly which is simple in structure and is relatively simple and inexpensive to manufacture and which is rugged and durable.

The exact nature of the present invention as well as other objects and advantages thereof will be readily apparent from consideration of the following specification in connection with the exemplary embodiments illustrated in the drawings, in which:

Figure 1 is a perspective view of a wheel bracket assembly embodying the invention,

Figure 2 is a front elevational view of the wheel bracket assembly of Figure 1,

Figure 3 is a rear elevational view of the wheel bracket assembly of Figure 1,

Figure 4 is a perspective view of a bracket part which is a component of the wheel bracket assembly of Figure 1.

Figure 5 is a different perspective view of the bracket part of Figure 4;

Figure 6 is an elevational side view of the wheel bracket assembly of Figure 1 with the wheel and axle omitted and a tubular leg of a shopping cart shown in section.

Figure 7 is a fragmentary sectional front view of the wheel bracket assembly of Figure 1;

Figure 8 is a fragmentary elevational side view similar to Figure 6 of an alternative embodiment of the wheel bracket assembly of Figure 1;

Figure 9 is a fragmentary elevational side view similar to Figure 6 of a further embodiment of the wheel bracket assembly of Figure 1.

Figure 10 is a fragmentary elevational side view similar to Figure 9 of a further embodiment of the wheel bracket assembly of Figure 1;

Figure 11 is a fragmentary elevational side view similar to Figure 9 of a further embodiment of the wheel bracket assembly of Figure 1;

Figure 12 is a fragmentary elevational side view similar to Figure 9 of a further embodiment of the wheel bracket assembly of Figure 1;

Figure 13 is a fragmentary sectional view similar to Figure 6 of a further embodiment of the wheel bracket assembly of Figure 1; and

Figure 14 is a fragmentary elevational side view of a conventional wheel bracket assembly with the wheel shown only in broken lines.

Certain terminology is used in the following description for convenience in reference only and is not to be considered limiting. For example, the words "up", "down", "front" and "rear" will designate directions in the drawings to which reference is made. The words "in" and "out" will respectively refer to directions toward and away from the geometric center of the wheel bracket assembly and designated parts thereof. Such terminology will include the words specifically mentioned above, derivatives thereof and words of similar import.

## DETAILED DESCRIPTION

A wheel bracket assembly 10 of conventional construction is illustrated in Figure 14. It includes a wheel bracket 11 which can rotatably support a wheel 12. The wheel bracket 11 includes a horn 13 which is made from a single piece of sheet metal bent to substantially a U-shape and has a bight 16 and two spaced, parallel legs 17 and 18. A hexagonal opening 19 is provided through the bight 16, and the legs 17 and 18 each have an opening 21 therethrough adjacent the lower end thereof. A pin 14 has a cylindrical shank 23 which extends through the opening 19 in the bight 16 and has a head 22 disposed against the undersurface of the bight 16. An upset 26 retains the pin 14 in place and is produced by shearing material from the pin 14. This shearing step causes the material of the pin 14 to flow to fill the hexagonal opening 19 and thereby prevent rotation of the pin 14 relative to the horn 13. Two vertically spaced transverse openings 24 are provided through the shank 23 of the pin 14.

Fabrication of the wheel bracket assembly 10 of Figure 14 requires a number of separate steps. More specifically, the pin 14 must be fabricated with the circular shank 23 and the head 22, and then the openings 24 must be drilled through the shank 23. The horn 13 must be stamped from a piece of metal, and must then be placed in a device which bends it to a U-shape.

Thereafter, the pin must be inserted through the hexagonal opening 19, and material must then be sheared from the shank 23 to create the upset 26. Then, a wheel must be placed between the legs 17 and 18 with its axle received in the openings 21, and then one or both ends of the axle must be upset to secure it in position.

The wheel bracket assembly 10 of Figure 14 is thus relatively complex and expensive to manufacture. Moreover, the connection between the horn 13 and pin 14 is frequently subject to relatively large stresses during use and may tend to become loose over a period of time.

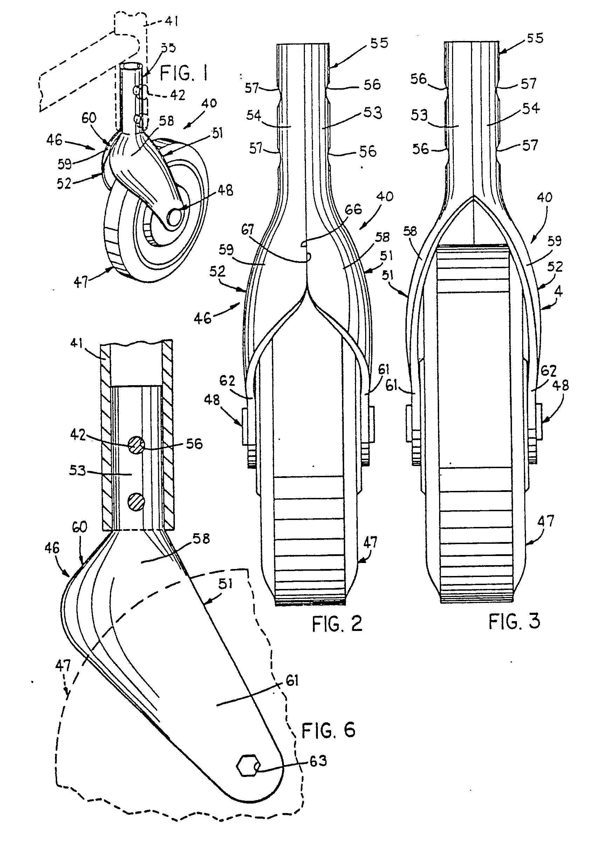

An improved wheel bracket assembly embodying the present invention is illustrated in Figure 1 and designated by reference numeral 40. The wheel bracket assembly 40 is shown in a typical application, namely, secured to a tubular rear leg 41 of a shopping cart frame by rivets or pins 42.

The wheel bracket assembly 40 includes a wheel bracket 46 and a wheel 47 which is rotatably supported on the wheel bracket 46 by means of an axle 48. The wheel 47 and axle 48 are discussed in greater detail hereinafter.

The wheel bracket 46 consists of two wheel bracket parts 51 and 52 which are mirror images of each other and are each made from a metal plate.

As shown in Figures 2 to 5, a respective stem portion 53 or 54 is provided at the upper end of each of the bracket parts 51 and 52. The stem portions 53 and 54 are each elongate, of uniform width, and bent to a substantially semicylindrical shape. The stem portion 53 has two vertically spaced openings 56 therethrough, and the stem portion 54 has corresponding openings 57 therethrough.

Each of the bracket parts 51 and 52 has a respective central region 58 or 59 which flares downwardly and outwardly from the lower end of the associated stem portion, is curved somewhat, and increases in width in a direction away from the stem portion.

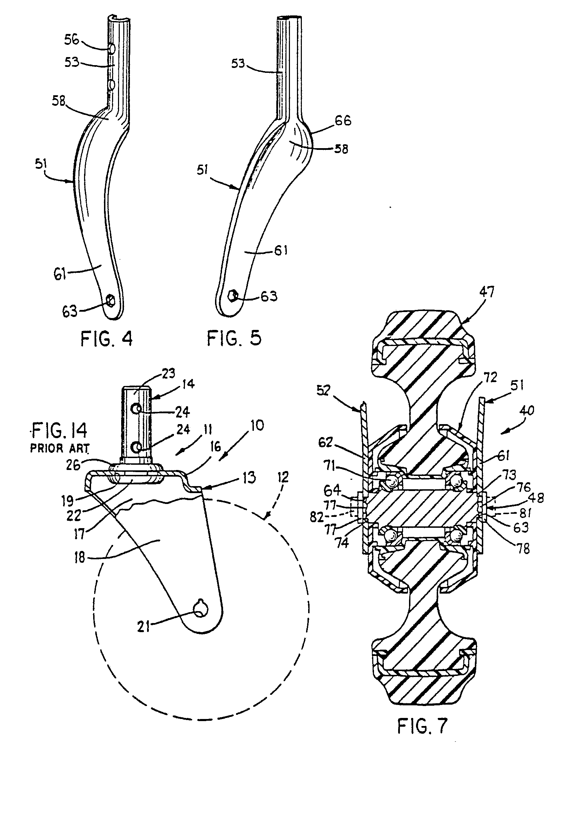

The central regions 58 and 59 each merge into a respective lower region 61 or 62 which extends substantially vertically downwardly, is substantially flat, and tapers in width in a downward direction. A respective noncircular opening 63 or 64 (Figures 6 and 7), which in the preferred embodiment is hexagonal, is provided through each of the bracket parts 51 and 52 adjacent the lower end thereof.

As best shown in Figures 2 and 3, the bracket parts 51 and 52 are arranged in a mirror image relationship in the wheel bracket assembly 40.

The stem portions 53 and 54 are adjacent and the lateral edges thereof engage each other, so that the stem portions 53 and 54 define a substantially cylindrical tube or stem 55. The openings 56 and 57 in the stem portions 53 and 54 are aligned with each other. The central regions 58 and 59 flare downwardly and outwardly away from each other, as best shown in Figure 3, but the curvature thereof permits the front lateral edges 66 and 67 of the central regions to engage each other along most of their length, as best shown in Figure 2. As shown in Figures 1 and 6, the portions of the central regions 58 and 59 forward of the stem 55 define a smoothly curved, somewhat bulbous front surface 60 which gives the bracket 46 a streamlined appearance and also helps to minimize damage or injury to property or people which the bracket 46 strikes during operational use.

The lower portions 61 and 62 of the bracket parts 51 and 52 are spaced and extend substantially parallel to each other on opposite sides of the wheel 47.

Referring to Figure 7, dust covers 72 are provided on each side of the wheel 47, and the wheel 47 is rotatably supported on the axle 48 by plural ball bearings 71. The wheel 47 and dust covers 72 are preferably identical to those disclosed in U.S. Patent No. 4 318 204, the disclosure of which is incorporated herein by reference. Accordingly, the wheel 47 and dust covers 72 are not described in detail here.

The axle 48 is a solid axle and is similar to the axle disclosed in U.S. Reissue Patent No. 31110, the disclosure of which is incorporated herein by reference. The axle 48 has respective axially outwardly facing annular shoulders 73 and 74 adjacent each end thereof which the lower portions 61 and 62 of the bracket parts 51 and 52 engage. Respective shanks 76 and 77 project axially outwardly beyond the shoulders 73 and 74 through the hexagonal openings 63 and 64 in the bracket parts 51 and 52. The outer end of each of the shanks 76 and 77 is upset to keep the bracket parts 51 and 52 in position.

The shanks 76 and 77, prior to creation of the upsets 78 and 79, project outwardly as shown in broken lines at 81 and 82 and have a circular cross section with a diameter slightly less than the minimum cross-sectional dimension of the hexagonal openings 63 and 64. As the upsets 78 and 79 are formed, the material of the shanks 76 and 77 flows to fill the openings 63 and 64, thereby securing the bracket parts 51 and 52 against rotation relative to each other or the axle 48, and thus maintaining them in angular alignment with each other.

A method of fabricating the wheel bracket assembly 40 will now be described.

A metal plate from which the bracket parts 51 and 52 are to be made is placed in a conventional stamping press having a specially formed die therein. A single stamping operation is carried out, which stamps out the two wheel bracket parts 51 and 52, produces the openings 56, 57, 63 and 64 therein, and, due to the shape of the die, simultaneously bends the bracket parts to the required shape.

The bracket parts 51 and 52 are then placed on opposite sides of the wheel 47, the ends 81 and 82 of the circular shanks 76 and 77 projecting through the hexagonal openings 63 and 64 as shown in Figure 7. The bracket parts 51 and 52 are angularly aligned so that the stem portions 53 and 54 are adjacent and define the cylindrical stem 55, and so that respective openings 56 and 57 in the stem portions 53 and 54 are aligned. The shank ends 81 and 82 are then upset as at 78 and 79, which causes the material of the shanks 76 and 77 to flow and fill the hexagonal openings 63 and 64, so that the wheel bracket parts 51 and 52 are fixed against axial movement and rotational movement relative to each other and to the axle 48.

The wheel bracket assembly 40 is then ready for shipment to a customer. It is unnecessary to provide any further interconnection between the wheel bracket parts 51 and 52 because the shoulders 73 and 74 and the upsets 78 and 79 will keep the bracket parts 51 and 52 from moving axially on the axle 48 and cooperation between the hexagonal shank portions 76 and 77 and the hexagonal openings 63 and 64 will prevent relative rotational movement of the angularly aligned bracket parts 51 and 52. Thus, the customer is provided with an assembly that is convenient to handle and install on a selected device.

The metal plate from which the bracket parts 51 and 52 are stamped is preferably a high carbon steel plate such as type C-1065 and, after the stamping operation, is preferably heat treated and drawn to give it a Rockwell hardness in the range of 45 to 55 Rockwell C and preferably 48 to 52 Rockwell C. This essentially converts the plate to spring steel. The thus increased tensile strength of the steel will enable the steel to withstand substantial shock loads without any plastic deformation.

The wheel bracket assembly 40 is thus relatively simple in structure and can be manufactured in a minimal amount of time with a minimal number of manufacturing steps. Moreover, it is very rugged and durable, particularly in view of the fact that the stem portions 53 and 54 are integral sections of the bracket parts 51 and 52 and thus will not develop play with respect thereto after extended use.

Although the axle shanks 76 and 77 (Figure 7) are preferably given a hexagonal shape by flow of the material of the axle during formation of the upsets 78 and 79, it will be recognized that the shanks 76 and 77 could alternatively be given an initial shape which has a hexagonal cross section.

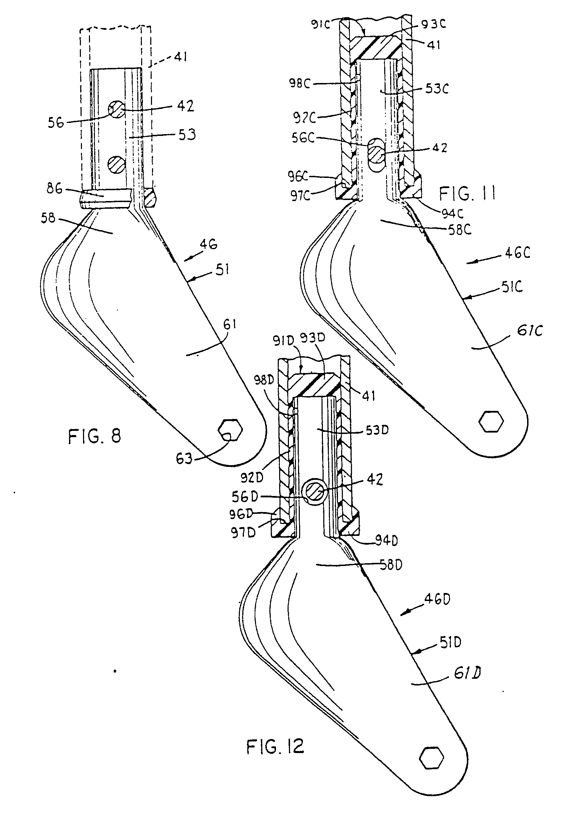

Figures 8 to 12 illustrate alternative embodiments of the wheel bracket assembly 40 of Figure 1. Elements which are identical to those in the embodiment of Figure 1 are designated by the same reference numerals, and elements which are similar are also designated by the same reference numerals but with a suffix "A" through "E" added thereto.

The embodiment of Figure 8 includes a wheel bracket 46 which is identical to the wheel bracket 46 of Figure 1 and is therefore not described in detail. A circular grommet 86 snugly encircles the cylindrical stem 53 of the bracket 46 at the end thereof adjacent the central region 58. The circular grommet 86 is preferably a molded plastic part and, during manufacture of the wheel bracket assembly, is slid onto the stem 53 after the parts of the bracket 46 have been secured in position by upsetting the ends of the wheel axle. Alternatively, the grommet 86 could be placed over the stem 53 prior to upsetting the ends of the axle in order to maintain the parts of the bracket 46 in proper angular alignment during the upsetting operation. When the stem 53 of this wheel bracket is secured in a tube 41 by rivets 42, the lower end of the tube 41 engages the top surface of the grommet 86.

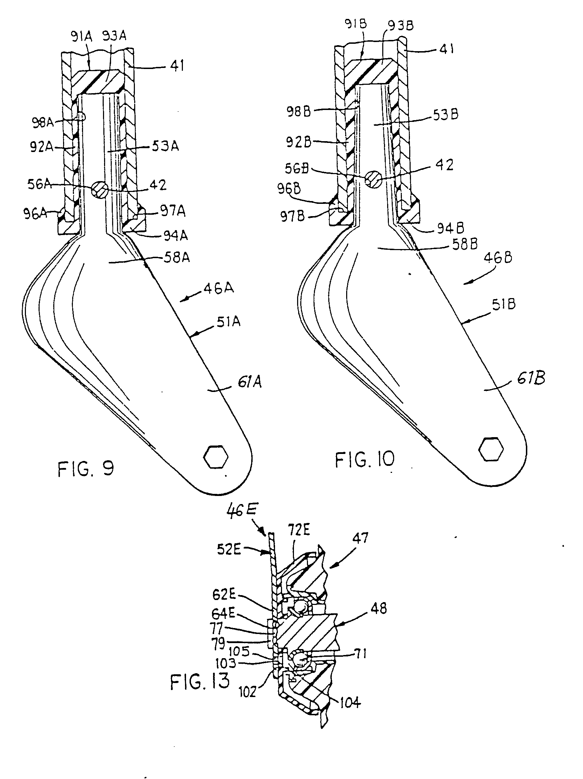

The alternative embodiment of Figure 9 includes a wheel bracket 46A which is substantially identical to the wheel bracket 46, except that only one opening 56A is provided in the stem 53A. A boot 91A is provided over the stem 53A and includes a cylindrical sleeve 92A which snugly surrounds the stem 53A, an end wall 93A which closes off the upper end of the sleeve 92A, a radially outwardly extending annular flange 94A which is provided at the lower end of the sleeve 92A, and an annular lip 96A which is provided at the radially outer edge of the flange 94A and extends axially toward the end wall 93A, thereby defining an annular recess 97A. The sleeve 92A snugly surrounds the stem 53A. The outer surface of the stem 53A and the inner surface 98A of the sleeve 92A have cross sections which are substantially constant along the length of the stem 53A and sleeve 92A. The cylindrical sleeve 92A has openings in opposite walls thereof which are aligned with the openings 56A and through which the rivet 42 extends when the wheel bracket is secured in the tube 41, the lower edge of the tube 41 being received in the annular recess 97A.

The boot 91A is made of a moldable synthetic resin material which is somewhat resilient, such as polyurethane having a Durometer hardness value in the range of 75 Shore A to 55 Shore D Durometer, and preferably 80 Shore A Durometer. The resiliency permits the stem 53A of the bracket 46A to pivot slightly within the tube 41 about the axis of the rivet 42 by elastically compressing the material of the boot 91A. This provides a degree a shock-absorbing capability during operational use which helps prolong the life of the bearing of a wheel supported on the bracket 46A.

The embodiment of Figure 10 is substantially identical to the embodiment of Figure 9, except that the cross-sections of the stem 53B of the bracket 46B and the internal surface 98B of the sleeve 92B taper upwardly. This provides a slightly larger amount of the resilient material of the boot 91B between the upper end of the stem 53B and the inner surface of the tube 41, thereby permitting a slightly greater amount of limited pivotal movement of the bracket 46B as compared to the embodiment of Figure 9.

The embodiment of Figure 11 is substantially identical to the embodiment of Figure 9, except that the openings 56C in the stem 53C, as well as the openings in the sleeve 92C aligned therewith, are elongate slots which extend lengthwise of the stem 53C and the sleeve 92C and have widths substantially equal to the diameter of the rivet 42. The wheel bracket 46C is thus capable of limited pivotal movement about the axis of the rivet 42 in a manner similar to the embodiment of Figure 9, and in addition is capable of a small amount of vertical movement relative to the tube 41 and boot 91C, thus improving its shock-absorbing capability. Upward movement of the bracket 46C from the position illustrated in Figure 11 requires a small amount of elastic deformation of the lower and upper ends of the boot 91C, and the boot 91C will thus tend to return the bracket 46C to the position illustrated in Figure 11.

The embodiment of Figure 12 is substantially identical to the embodiment of Figure 9, except that the openings 56D in the stem 53D, as well as the openings in the sleeve 92D which are aligned therewith, have a diameter somewhat greater than that of the rivet 42.

The wheel bracket 46D can thus pivot about the axis of the rivet 42 and move vertically relative to the boot 91D and tube 41, in a manner similar to that described above for the embodiment of Figure 11. In addition, the wheel bracket 46D is capable of a limited amount of pivotal movement about a vertical axis coincident with the axis of the tube 41 due to the oversized circular openings 56D, thus increasing its shock-absorbing capability.

In addition to the shock-absorbing capability described above, the boots 91A-D of Figures 9 through 12 have the further advantage that they permit a given wheel bracket assembly having a stem of a given diameter to be used with a tube 41 which has one of several internal diameters. More specifically, depending on the internal diameter of the particular tube 41 on which the wheel bracket assembly is to be mounted, a boot is selected which has an internal diameter which corresponds to the stem and an external diameter which corresponds to the internal diameter of the selected tube 41. Thus, it is unnecessary to fabricate several expensive sets of stamping dies to make wheel brackets with stems of various diameters, and it is also unnecessary to manufacture and inventory a number of models of wheel brackets which have stems of various diameters. Instead, it is necessary only to manufacture and inventory several boots of different size and only a single version of the completed wheel bracket assembly, which is much more economical.

The modified embodiment according to Figure 13 is substantially identical to the embodiment of Figure 7, except that the dust cover 72E has an opening 103 through a region 102 thereof which is spaced radially from the axle 48 and is radially aligned with the annular space 104 in which the bearing arrangement 71 is provided. A small opening 105 is provided through the lower end of the bracket part 52E and is radially spaced from the axle 48 the same distance as the region 102 and opening 103.

It is possible for the dust cover 72E to rotate relative to the bracket part 52E and the axle 48, but frictional engagement of the dust cover 72E with these parts will normally keep it from rotating with the wheel 47 during operational use of the wheel bracket assembly. The dust cover 72E will usually be placed at an angular position relative to the bracket part 52E so that the openings 103 and 105 are not angularly aligned and are thus closed by the inner surface of the bracket part 52E and the outer surface of the dust cover 72E, respectively. If further lubrication of the bearing arrangement 71 should eventually become necessary, the dust cover 72E is manually rotated until the openings 103 and 105 are angularly aligned, then a lubricating substance is injected with a small nozzle through the aligned openings, and then the dust cover 72E is manually rotated relative to the bracket part 52E until the openings 103 and 105 are no longer aligned.

The dust cover 72E is preferably made of plastic, and it will be recognized that the region 102 thereof could be initially manufactured without the opening 103 but in a manner so that the opening 103 can be easily created when needed, for example by inserting an ice pick or similar tool through the opening 105 and using it to pierce the opening 103 through the region 102. In this case, the region 102 can be a circular zone which is concentric to the axle 48 and has a radius equal to the distance from the axis of the axle 48 to the opening 105 in the bracket part 52E.

It will also be recognized that the opening 105 in the bracket part 52E can also be eliminated if the configuration of the bracket part 52E is such that the dust cover 72E can be moved between two angular positions relative to the bracket part 52E, in one of which the region 102 is externally exposed and accessible, and in the other of which the region 102 is disposed against the inner surface of the bracket part 52E. In this case, since the opening 105 is not provided to serve as a guide for piercing the opening 103 at the proper radial location it is helpful to provide a visible mark on the dust cover 72E to clearly identify the region 102.

**Claims.**

1. A method of making a wheel bracket assembly, comprising the steps of fabricating two separate platelike bracket parts (51—51D, 52, 52E) which are substantially mirror images of each other, each having an opening (63, 64) therethrough, providing an axle (48) for supporting a wheel (47) rotatably thereon, bringing said axle (48) inbetween said bracket parts (51-51D, 52, 52E) so that each end (81, 82) of said axle (48) extends through said opening (63, 64) in a respective said bracket part characterized by the steps of providing an axle (48), means defining a respective axially outwardly facing shoulder (73, 74) adjacent each end thereof and having a wheel (47) rotatably supported thereon, fabricating bracket parts (51-51D, 52, 52E) each having a noncircular opening (63, 64), placing said bracket parts in mirror image relationship on opposite sides of said wheel (47) so that each end (81, 82) of said axle (48) extends through said noncircular opening (63, 64) in a respective said bracket part, bringing said bracket parts in angular alignment and upsetting each end of said axle to retain said bracket parts in place on said axle and so that the material of said axle flows to fill said noncircular openings in the bracket parts, thereby preventing relative rotation of said bracket parts about said axle, maintaining said bracket parts in said angular alignment with each other and keeping said bracket parts from moving axially on said axle, without any further interconnection between the bracket parts.

2. The method according to claim 1, wherein each said bracket part (51-51D, 52, 52E) includes first (58-58D, 59, 61-61D, 62, 62E) and second (53-53D, 54) portions, said first portion having said noncircular opening (63, 64) therein at a location spaced from said second portion, and wherein said fabrication step includes the step of stamping each said bracket part out of a metal plate, said stamping step bending each said second portion so that said second portions substantially define a tube (55) when placed in said mirror image relationship.

3. The method according to Claim 2, wherein each said second portion is bent to a substantially semicylindrical shape, and wherein said second portions are adjacent when placed in said mirror image relationship and define a substantially cylindrical tube.

4. The method according to Claim 3, including after said upsetting step the step of placing an annular member (86, 91A-91D) onto said substantially cylindrical tube defined by said second portions, the internal diameter of said annular member being substantially equal to the outside diameter of said tube.

5. The method according to Claim 4, wherein said annular member is a grommet (86), and including the step of positioning said grommet at a location on said tube adjacent said first portions of said bracket part.

6. The method according to Claim 4, wherein said stamping step produces an additional opening (56-56D, 57) in said second portion of each said bracket part, wherein said annular member is an elongate sleeve (91A-91D) having two aligned further openings in opposite sides thereof, and including the step of aligning each said further opening with a respective said additional opening.

7. The method according to Claim 2, wherein said stamping step produces a further opening (56-56D, 57) in said second portion of each said bracket part, said further openings being aligned when said bracket parts are placed in said mirror image relationship.

8. The method according to Claim 2, wherein said first portion of each said bracket part includes a central region (58-58D, 59) which is adjacent said second portion thereof and a lower region (61-61D, 62, 62E) which is remote from said second portion thereof, said stamping step bending said first portion of each said bracket part so that, when said bracket parts are placed in said mirror image relationship, said central regions thereof are flared outwardly away from each other in a direction away from said second portions and said lower regions extend approximately parallel to each other.

9. The method according to Claim 8, wherein said stamping step is carried out with a single stamping operation.

10. The method according to Claim 1, wherein said noncircular opening is substantially hexagonal.

11. The method according to Claim 1, wherein said fabricating step includes the step of stamping each said bracket part out of a metal plate; and including following said stamping step the steps of heating and drawing said bracket parts so as to impart thereto a Rockwell hardness in the range of 45 to 55 RC.

12. A wheel bracket assembly, comprising a bracket (46-46E) which includes two separate, platelike bracket parts (51-51D, 52, 52E), each having an opening (63, 64 64E) therein; an axle (48); a wheel (47) rotatably supported on said axle, said bracket parts being disposed on opposite sides of said wheel and each end (76, 77) of said axle extending through a respective said opening, said bracket parts being angularly aligned and fixed against axial movement relative to said axle; and cooperating means (63, 64, 64E, 78, 79) preventing relative rotation between said bracket parts, characterized in that said axle (47) has means defining a respective axially outwardly facing shoulder (73, 74) adjacent each end thereof, each said bracket part (51-51D, 52, 52E) being disposed against a respective said shoulder (73, 74) and in that said cooperating means includes said openings (63, 64, 64E) in said bracket parts being noncircular, includes an upset (78, 79) at each end of said axle, and includes the material of said axle having flowed to fill said noncircular openings in said bracket parts during creation of said upsets, said bracket parts being fixed against said axle movement and said rotational movement relative to each other and to the axle without any further interconnection between the bracket parts, the shoulders (73, 74) and the upsets (78, 79) keeping said bracket parts (51, 52) from moving axially on the axle (48) and cooperation between said non circular openings (63, 64) and the non circular portions of said axle filling said non circular openings preventing rotation of said aligned bracket parts relative to each other and about said axle.

13. The wheel bracket assembly according to claim 12, wherein said bracket parts are substantially mirror images of each other and each have first (58-58D, 59, 61-61D, 62, 62E) and second (53-53D, 54) portions, each said second portion being substantially semicylindrical and said second portions being adjacent each other and defining a substantially cylindrical tube (55).

14. The wheel bracket assembly according to Claim 13, including a further opening (56-56D, 57) in said second portion of each said bracket part, said further openings being aligned with each other.

15. The wheel bracket assembly according to Claim 14, wherein said further openings are each an elongate slot (56C) extending axially of said cylindrical tube.

16. The wheel bracket assembly according to Claim 13, wherein said first portion of each said bracket part includes central (58-58D, 59) and lower (61-61D, 62, 62E) regions which are respectively adjacent and spaced from said second portion thereof, said central regions being flared outwardly away from each other in a direction away from said second portions and said lower regions being spaced from and substantially parallel to each other, each said opening (63, 64, 64E) being provided in said lower region of a respective said bracket part at a location spaced from said central region thereof.

17. The wheel bracket assembly according to Claim 16, wherein each said central region increases in width in a direction away from said second portion, and wherein each said central region tapers in width in a direction away from said second portion.

18. The wheel bracket assembly according to Claim 16, including a grommet (86) provided on and snugly surrounding said tube at a location adjacent said central regions of said bracket parts.

19. The wheel bracket assembly according to Claim 16, wherein the lateral edges (66, 67) of said central regions of said bracket parts are curved inwardly toward each other, a portion of the lateral edges of said central regions on respective said bracket parts butting against each other.

20. The wheel bracket assembly according to Claim 13, including an elongate tubular sleeve (91A-91D, 92A-92D) which is made of a resilient material, is provided on and snugly surrounds said tube and has two aligned openings provided in opposite sides thereof, and including an opening (56A-56D) provided through said second portion of each said bracket part and aligned with a respective said opening in said sleeve.

21. The wheel bracket assembly according to Claim 20, wherein the cross-sections of the outer surface of said sleeve, the outer surface of said tube and the inner surface (98A, 98C, 98D) of said sleeve are of substantially constant size and shape along the length of said sleeve.

22. The wheel bracket assembly according to Claim 20, wherein the cross-section of the outer surface of said sleeve is substantially constant along the length of said sleeve, and wherein the cross-sections of the outer surface of said tube and the inner surface (98B) of said sleeve taper in a direction away from said first portions of said bracket parts.

23. The wheel bracket assembly according to Claim 20, including an end wall (93A-93D) which closes one end of said sleeve which is remote from said first portions of said bracket parts, a radially outwardly extending annular flange (94A-94D) adjacent the end of said sleeve remote from said one end, and an annular lip (96A-96D) projecting axially toward said one end of said sleeve from the peripheral edge of said annular flange, said lip being spaced radially from said sleeve.

24. The wheel bracket assembly according to Claim 20, wherein said openings in said sleeve and said openings in said tube are each an elongate slot (56C) which extends lengthwise of said sleeve and said tube.

25. The wheel bracket assembly according to Claim 20, including a frame (41) having a pin (42) which extends through said openings in said sleeve and said openings in said tube, and wherein the dimensions of said openings (56C, 56D) in said sleeve and said tube are greater than the dimensions of said pin.

26. The wheel bracket assembly according to Claim 12, wherein said bracket parts are each made from steel plates having a Rockwell hardness in the range of 48-50 RC.

27. The wheel bracket assembly according to Claim 12, wherein each said noncircular opening is substantially hexagonal.

28. The wheel bracket assembly according to Claim 12 or 26, including bearing means (71) rotatably supporting said wheel on said axle between said bracket parts, and two dust covers (72E) provided on opposite sides of said wheel to protect said bearing means and each slidably engaging a respective said bracket part, each said dust cover being rotatable on said axle relative to said bracket but being normally held against such relative rotation through frictional engagement with said bracket, and one of said dust covers having means defining a region (102) which is approximately radially aligned with said bearing means and is spaced a predetermined distance from said axle, said one dust cover being manually rotatable relative to said bracket part which is associated therewith between a first position in which said region of said dust cover is externally exposed and accessible and a second position in which said region is firmly disposed against an inner surface of said bracket part and external access thereto is obstructed by said bracket part.

29. The wheel bracket assembly of Claim 28, including means for facilitating piercing of said region of said one dust cover to produce an opening (103) therethrough, said opening providing external access to said bearing means when said one dust cover is in said first position and being closed by said associated bracket part when said one dust cover is in said second position.

30. The wheel bracket assembly of Claim 29, including a pierceable annular zone on said one dust cover which is concentric with respect to said axle, said region being a portion of said annular zone.

31. The wheel bracket assembly of Claim 28, wherein said region of said one dust cover has an opening (103) therethrough which provides external access to said bearing means when said one dust cover is in said first position and is closed by said associated bracket part when said one dust cover is in said second position.

32. The wheel bracket assembly of Claim 28, including an opening (105) through said associated bracket part, said region of said one dust cover being aligned with and externally accessible through said opening when said one dust cover is in said first position.

## Patentansprüche

1. Verfahren zur Herstellung einer Radkonsolen-Bauteilgruppe, umfassend die Verfahrensschritte, zwei separate, plattenartige Konsolenteile (51-51D, 52, 52E) herzustellen, die im wesentlichen Spiegelbilder von einander sind, wobei jedes eine Öffnung (63, 64) durch diese hindurch aufweist, eine Achse (48) vorzusehen, um ein Rad (47) drehbar daran abzustützen, die Achse (48) zwischen die Konsolenteile (51-51D, 52, 52E) zu bringen, so daß jedes Ende (81, 82) der Achse (48) sich durch die Öffnung (63, 64) in einem entsprechenden Konsolenteil hindurch erstreckt, gekennzeichnet durch folgende Verfahrensschritte: Vorsehen einer Achse (48), einer Vorrichtung, die eine entsprechende axial nach außen gerichtete Schulter (73, 74), angrenzend an jedes Ende davon, bildet, und ein Rad (47) aufweist, das darin drehbar gelagert ist, Herstellen von Konsolenteilen (51-51D, 52, 52E), die jeweils eine nichtkreisförmige Öffnung (63, 64) besitzen, Placieren der Konsolenteile in Spiegelbildbeziehung an entgegengesetzten Seiten des Rades (47), so daß sich jedes Ende (81, 82) der Achse (48) durch die nichtkreisförmige Öffnung (63, 64) in einem entsprechenden Konsolenteil hindurch erstreckt, Bringen der Konsolenteile in winklige Ausrichtung und Stauchen jedes Endes der genannten Achse, um die genannten Konsolenteile an ihrer Stelle an der genannten Achse zurückzuhalten und derart, daß das Material der genannten Achse fließt, um die genannten nichtkreisförmigen Öffnungen in diesen Konsolenteilen zu füllen, wodurch relative Drehung der genannten Konsolenteile um die genannte Achse verhindert wird, die genannten Konsolenteile in der genannten winkligen Ausrichtung zueinander gehalten werden und wodurch die genannten Konsolenteile daran gehindert werden, sich axial auf der genannten Achse zu bewegen, ohne irgendeine weitere gegenseitige Verbindung zwischen den Konsolenteilen.

2. Verfahren nach Anspruch 1, dadurch gekennzeichnet, daß jeder Konsolenteil (51-51D, 52, 52E) erste Teilstücke (58-58D, 59, 61-61D, 62, 62E) und zweite Teilstücke (53-53D, 54) aufweist, wobei das erste Teilstück eine nichtkreisförmige Öffnung (63, 64) darin an einer Lokation besitzt, die von dem zweiten Teilstück mit Abstand angeordnet ist, und daß der genannte Fabrikationsschritt den Schritt einschließt, jeden Konsolenteil aus einem Metallblech zu stanzen, wobei der genannte Stanzungsschritt jedes genannte zweite Teilstück so biegt, daß die genannten zweiten Teilstücke im wesentlichen ein Rohr (55) bilden, wenn sie in der genannten Spiegelbildbeziehung placiert werden.

3. Verfahren nach Anspruch 2, dadurch gekennzeichnet, daß jedes genannte zweite Teilstück in eine im wesentlichen semizylindrische Form gebogen wird, und daß die genannten zweiten Teilstücke aneinandergrenzen, wenn sie in der genannten Spiegelbildbeziehung placiert sind, und ein im wesentlichen zylindrisches Rohr bilden.

4. Verfahren nach Anspruch 3, dadurch gekennzeichnet, daß nach dem genannten Stauchungsschritt der Schritt eingeschlossen ist, einen ringförmigen Bauteil (86, 91A-91D) an dem genannten im wesentlichen zylindrischen Rohr, das durch die genannten zweiten Teilstücke gebildet wird, zu placieren, wobei der Innendurchmesser des genannten ringförmigen Bauteils dem Außendurchmesser des genannten Rohrs im wesentlichen entspricht.

5. Verfahren nach Anspruch 4, dadurch gekennzeichnet, daß der genannte ringförmige Bauteil aus einer Gummitülle (86) besteht, und daß der Schritt eingeschlossen ist, die genannte Gummitülle an einer Lokation an dem genannten Rohr angrenzend an die genannten ersten Teilstücke des genannten Konsolenteils anzuordnen.

6. Verfahren nach Anspruch 4, dadurch gekennzeichnet, daß der genannte Stanzungsschritt eine zusätzliche Öffnung (56-56D, 57) in dem genannten zweiten Teilstück jedes genannten Konsolenteils herstellt, daß der genannte ringförmige Bauteil aus einer länglichen Hülse (91A-91D) besteht, mit zwei ausgerichteten weiteren Öffnungen in entgegengesetzten Seiten davon, und daß der Schritt eingeschlossen ist, jede genannte weitere Öffnung mit einer entsprechenden genannten zusätzlichen Öffnung auszurichten.

7. Verfahren nach Anspruch 2, dadurch gekennzeichnet, daß der genannte Stanzungsschritt eine weitere Öffnung (56-56D, 57) in dem genannten zweiten Teilstück jedes genannten Konsolenteils herstellt, wobei die genannten weiteren Öffnungen ausgerichtet sind, wenn die genannten Konsolenteile in der genannten Spiegelbildbeziehung placiert sind.

8. Verfahren nach Anspruch 2, dadurch gekennzeichnet, daß das genannte erste Teilstück jedes genannten Konsolenteils eine zentrale Region (58-58D, 59) einschließt, welche an das genannte zweite Teilstück davon angrenzt, und eine untere Region (61-61D, 62, 62E), welche von dem genannten zweiten Teilstück davon abgelegen ist, wobei der genannte Stanzungsschritt das genannte erste Teilstück jedes genannten Konsolenteils derart biegt, daß, wenn die genannten Konsolenteile in der genannten Spiegelbildbeziehung placiert sind, die genannten zentralen Regionen davon nach außen voneinander weg in einer Richtung von den genannten zweiten Teilstücken weg erweitert sind und die genannten unteren Regionen sich nahezu parallel zueinander erstrecken.

9. Verfahren nach Anspruch 8, dadurch gekennzeichnet, daß der genannte Stanzungsschritt mit einem einzigen Stanzvorgang durchgeführt wird.

10. Verfahren nach Anspruch 1, dadurch gekennzeichnet, daß die genannte nichtkreisförmige Öffnung im wesentlichen sechseckig vorgesehen ist.

11. Verfahren nach Anspruch 1, dadurch gekennzeichnet, daß der genannte Fabrikationsschritt den Schritt einschließt, jeden genannten Konsolenteil aus einem Metallblech zu stanzen, und anschließend an den genannten Stanzungsschritt die Schritte eingeschlossen sind, die genannten Konsolenteile zu erwärmen und zu ziehen, derart, daß eine Rockwell-Härte im Bereich von 45 bis 55 RC darauf aufgebracht wird.

12. Radkonsolen-Bauteilgruppe, umfassend eine Konsole (46-46E), welche zwei separate, plattenartige Konsolenteile (51-51D, 52, 52E) einschließt, wobei jeder eine Öffnung (63, 64, 64E) darin aufweist; eine Achse (48); ein Rad (47), auf der genannten Achse drehbar gelagert wobei die genannten Konsolenteile an entgegengesetzten Seiten des genannten Rades angeordnet sind und wobei sich jedes Ende (76, 77) der genannten Achse durch eine entsprechende genannte Öffnung hindurch erstreckt, wobei die genannten Konsolenteile winklig ausgerichtet sind und gegen axiale Bewegung relativ zu der genannten Achse fixiert sind, sowie zusammenwirkende Mittel (63, 64, 64E, 78, 79), die relative Bewegung zwischen den genannten Konsolenteilen verhindern, dadurch gekennzeichnet, daß die genannte Achse (47) eine Vorrichtung aufweist, die eine entsprechende axial nach außen gerichtete Schulter (73, 74) angrenzend an jedes Ende davon bildet, wobei jeder genannte Konsolenteil (51-51D, 52, 52E) gegen eine entsprechende genannte Schulter (73, 74) angeordnet ist, und daß die genannten zusammenwirkenden Mittel die genannten Öffnungen (63, 64, 64E) in den genannten Konsolenteilen, die nichtkreisförmig sind, einschließen, eine Stauchung (78, 79) an jedem Ende der genannten Achse einschließen, und das Material der genannten Achse einschließen, das geflossen ist, um die genannten nichtkreisförmigen Öffnungen in den genannten Konsolenteilen während des Vorsehens der genannten Stauchungen zu füllen, wobei die genannten Konsolenteile gegen die genannte axiale Bewegung fixiert sind und die genannte Drehbewegung relativ zueinander und zu der Achse ohne irgendeine weitere gegenseitige Verbindung zwischen den Konsolenteilen, den Schultern (73, 74) und den Stauchungen (78, 79) die genannten Konsolenteile (51, 52) davon abhalten, sich axial auf der Achse (48) zu bewegen, und; daß ein Zusammenwirken zwischen den genannten nichtkreisförmigen Öffnungen (63, 64) und den nichtkreisförmigen Teilstücken der genannten Achse die genannten nichtkreisförmigen Öffnungen füllt, wodurch Drehung der genannten ausgerichteten Konsolenteile relativ zueinander und um die genannte Achse verhindert wird.

13. Radkonsolen-Bauteilgruppe nach Anspruch 12, dadurch gekennzeichnet, daß die genannten Konsolenteile im wesentlichen Spiegelbilder voneinander sind und jeweils erste Teilstücke (58-58D, 59, 61-61D, 62, 62E) und zweite Teilstücke (53-53D, 54) aufweisen, wobei jedes genannte zweite Teilstück im wesentlichen semizylindrisch vorgesehen ist, und daß die genannten zweiten Teilstücke angrenzend aneinander vorgesehen sind und ein im wesentlichen zylindrisches Rohr (55) bilden.

14. Radkonsolen-Bauteilgruppe nach Anspruch 13, dadurch gekennzeichnet, daß eine weitere Öffnung (56-56D, 57) in dem genannten zweiten Teilstück jedes genannten Konsolenteils eingeschlossen ist, wobei die genannten weiteren Öffnungen zueinander ausgerichtet sind.

15. Radkonsolen-Bauteilgruppe nach Anspruch 14, dadurch gekennzeichnet, daß die genannten weiteren Öffnungen jeweils aus einem länglichen Schlitz (56C) bestehen, der sich axial des genannten zylindrischen Rohrs erstreckt.

16. Radkonsolen-Bauteilgruppe nach Anspruch 13, dadurch gekennzeichnet, daß das genannte erste Teilstück jedes genannten Konsolenteils zentrale (58-58D, 59) und untere (61-61D, 62, 62E) Regionen einschließt, die entsprechend angrenzend und mit Abstand von dem genannten zweiten Teilstück davon angeordnet sind, wobei die genannten zentralen Regionen voneinander weg in einer Richtung von den genannten zweiten Teilstücken weg nach außen erweitert sind und die genannten unteren Regionen mit Abstand voneinander und im wesentlichen parallel zueinander angeordnet sind, wobei jede genannte Öffnung (63, 64, 64E) in der genannten unteren Region eines entsprechenden genannten Konsolenteils an einer Lokation vorgesehen ist, die von der genannten zentralen Region davon mit Abstand angeordnet ist.

17. Radkonsolen-Bauteilgruppe nach Anspruch 16, dadurch gekennzeichnet, daß jede genannte zentrale Region in der Breite zunimmt in einer Richtung von dem genannten zweiten Teilstück weg, und daß jede genannte zentrale Region in der Breite abnimmt in einer Richtung von dem genannten zweiten Teilstück weg.

18. Radkonsolen-Bauteilgruppe nach Anspruch 16, dadurch gekennzeichnet, daß eine Gummitülle (86) eingeschlossen ist, die an dem genannten Rohr vorgesehen ist und dieses satt anliegend umgibt, an einer Lokation angrenzend an die genannten zentralen Regionen der genannten Konsolenteile.

19. Radkonsolen-Bauteilgruppe nach Anspruch 16, dadurch gekennzeichnet, daß die seitlichen Ränder (66, 67) der genannten zentralen Regionen der genannten Konsolenteile aufeinander zu einwärts gekrümmt sind, wobei ein Teilstück der seitlichen Ränder der genannten zentralen Regionen an entsprechenden genannten Konsolenteilen aneinander anliegt.

20. Radkonsolen-Bauteilgruppe nach Anspruch 13, dadurch gekennzeichnet, daß eine längliche rohrförmige Hülse (91A-91D, 92A-92D) eingeschlossen ist, die aus einem elastischen Material besteht, an dem genannten Rohr vorgesehen ist und dieses satt anliegend umgibt und zwei ausgerichtete Öffnungen besitzt, die an entgegengesetzten Seiten davon vorgesehen sind, und daß eine Öffnung (56A-56D) eingeschlossen ist, die durch das genannte zweite Teilstück jedes genannten Konsolenteils hindurch vorgesehen ist und mit einer entsprechenden genannten Öffnung in der genannten Hülse ausgerichtet ist.

21. Radkonsolen-Bauteilgruppe nach Anspruch 20, dadurch gekennzeichnet, daß die Querschnitte der äußeren Oberfläche der genannten Hülse, die äußere Oberfläche des genannten Rohrs und die innere Oberfläche (98A, 98C, 98D) der genannten Hülse von im wesentlichen konstanter Größe und Form über die Länge der genannten Hülse sind.

22. Radkonsolen-Bauteilgruppe nach Anspruch 20, dadurch gekennzeichnet, daß der Querschnitt der äußeren Oberfläche der genannten Hülse über die Länge der genannten Hülse im wesentlichen konstant ist, und daß die Querschnitte der äußeren Oberfläche des genannten Rohrs und die innere Oberfläche (98B) der genannten Hülse in einer Richtung von den genannten ersten Teilstücken der genannten Konsolenteile weg abnehmen.

23. Radkonsolen-Bauteilgruppe nach Anspruch 20, dadurch gekennzeichnet, daß eine Endwand (93A-93D) eingeschlossen ist, welche ein Ende der genannten Hülse, das von den genannten ersten Teilstücken der genannten Konsolenteile abgelegen ist, schließt, ein sich radial nach außen erstreckender ringförmiger Flansch (94A-94D) angrenzend an das Ende der genannten Hülse, abgelegen von dem genannten einen Ende, und eine ringförmige Lippe (96A-96D), die axial auf das genannte eine Ende der genannten Hülse zu von dem peripheren Rand des genannten ringförmigen Flansches her vorragt, wobei die genannte Lippe radial von der genannten Hülse her mit Abstand vorgesehen ist.

24. Radkonsolen-Bauteilgruppe nach Anspruch 20, dadurch gekennzeichnet, daß die genannten Öffnungen in der genannten Hülse und die genannten Öffnungen in dem genannten Rohr jeweils aus einem länglichen Schlitz (56C) bestehen, der sich längsweis der genannten Hülse und des genannten Rohrs erstreckt.

25. Radkonsolen-Bauteilgruppe nach Anspruch 20, dadurch gekennzeichnet, daß ein Rahmen (41) eingeschlossen ist, mit einem Stift (42), der sich durch die genannten Öffnungen in der genannten Hülse und die genannten Öffnungen in dem genannten Rohr hindurch erstreckt, und daß die Abmessungen der genannten Öffnungen (56C, 56D) in der genannten Hülse und in dem genannten Rohr größer als die Abmessungen des genannten Stifts sind.

26. Radkonsolen-Bauteilgruppe nach Anspruch 12, dadurch gekennzeichnet, daß die genannten Konsolenteile aus Stahlblechen hergestellt sind, mit einer Rockwell-Härte in dem Bereich von 48-50 RC.

27. Radkonsolen-Bauteilgruppe nach Anspruch 12, dadurch gekennzeichnet, daß jede genannte nichtkreisförmige Öffnung im wesentlichen sechseckig vorgesehen ist.

28. Radkonsolen-Bauteilgruppe nach Anspruch 12 oder 26, dadurch gekennzeichnet, daß eine Lagervorrichtung (71) eingeschlossen ist, die das genannte Rad an der genannten Achse zwischen den genannten Konsolenteilen drehbar abstützt, und zwei Staubabdeckungen (72E), an entgegengesetzten Seiten des genannten Rades vorgesehen, um die genannte Lagervorrichtung zu stützen, wobei ein entsprechender genannter Konsolenteil jeweils gleitbar erfaßt wird, wobei jede genannte Staubabdeckung an der genannten Achse relativ zu der genannten Konsole drehbar ist, aber normalerweise gegen solche relative Drehung durch Reibungseingriff mit der genannten Konsole gehalten wird, und daß eine der genannten Staubabdeckungen Mittel besitzt, welche eine Region (102) bilden, die mit der genannten Lagervorrichtung ungefähr radial ausgerichtet ist und eine vorbestimmte Distanz von der genannten Achse her beabstandet ist, wobei die genannte eine Staubabdeckung relativ zu dem genannten Konsolenteil manuell drehbar ist, der damit assoziiert ist zwischen einer ersten Position, in welcher die genannte Region der genannten Staubabdeckung extern exponiert und zugänglich ist, und einer zweiten Position, in welcher die genannte Region gegen eine innere Oberfläche des genannten Konsolenteils fest angeordnet ist und externer Zugang dazu durch den genannten Konsolenteil verhindert wird.

29. Radkonsolen-Bauteilgruppe nach Anspruch 28, dadurch gekennzeichnet, daß Mittel vorgesehen sind, um das Durchdringen der genannten Region einen Staubabdeckung zu erleichtern, um eine Öffnung (103) durch diese hindurch herzustellen, wobei die genannte Öffnung externen Zugang zu der genannten Lagervorrichtung vorsieht, wenn die genannte eine Staubabdeckung sich in der genannten ersten Position befindet und durch den genannten assoziierten Konsolenteil geschlossen wird, wenn die genannte eine Staubabdeckung sich in der genannten zweiten Position befindet.

30. Radkonsolen-Bauteilgruppe nach Anspruch 29, dadurch gekennzeichnet, daß eine durchstoßbare ringförmige Zone an der genannten einen Staubabdeckung eingeschlossen ist, welche in bezug auf die genannte Achse konzentrisch vorgesehen ist, wobei die genannte Region ein Teilstück der genannten ringförmigen Zone ist.

31. Radkonsolen-Bauteilgruppe nach Anspruch 28, dadurch gekennzeichnet, daß die genannte Region der genannten einen Staubabdeckung eine Öffnung (103) durch diese hindurch aufweist, welche externen Zugang nach der genannten Lagervorrichtung hin vorsieht, wenn sich die genannte eine Staubabdeckung in der genannten ersten Position befindet und durch den genannten assoziierten Konsolenteil geschlossen wird, wenn sich die genannte eine Staubabdeckung in der genannten zweiten Position befindet.

32. Radkonsolen-Bauteilgruppe nach Anspruch 28, dadurch gekennzeichnet, daß eine Öffnung (105) durch den genannten assoziierten Konsolenteil hindurch eingeschlossen ist, wobei die genannte Region der genannten einen Staubabdeckung mit der genannten Öffnung ausgerichtet ist und durch diese hindurch extern zugänglich ist, wenn sich die genannte eine Staubabdeckung in der genannten ersten Position befindet.

**Revendications**

1. Procédé de fabrication d'un support de roulette orientable, comportant les étapes consistant à fabriquer deux pièces de support distinctes en forme de plaque (51-51D, 52, 52E), qui sont en substance l'image spéculaire l'une de l'autre, chacune présentant un orifice (63, 64), à prévoir un axe (48) pour supporter à rotation une roulette (47), à amener ledit axe (48) entre les dites pièces de support (51-51D, 52, 52E) de manière que chaque extrémité (81, 82) dudit axe (48) s'étende au travers de l'orifice (63, 64) dans une desdites pièces de support respectives, caractérisé en ce qu'il comprend les étapes consistant à prévoir un axe (48), des moyens définissant, adjacent à chacune de ses extrémités, un épaulement (73, 74) orienté respectivement vers l'extérieur considéré dans le sens axial, et une roulette (47) montée à rotation sur le dit axe, à fabriquer des pièces de support (51-51D, 52, 52E) possédant chacune un orifice non-circulaire (63, 64), à placer les dites pièces de support en relation spéculaire de part et d'autre de la roulette (47) de telle manière que chaque extrémité (81, 82) de l'axe (48) s'étende au travers de l'orifice non-circulaire (63, 64) dans une pièce de support respective, à amener les pièces de support en alignement angulaire et à refouler chaque extrémité de l'axe pour retenir les pièces de support en place sur l'axe, de telle sorte que la matière du dit axe se répande pour remplir les orifices non circulaires dans ces pièces de support, empêchant ainsi une rotation relative des dites pièces de support autour de l'axe, maintenant les pièces de support dans le dit alignement angulaire l'une par rapport à l'autre et empêchant les pièces de support de se déplacer axialement sur l'axe, sans autre interconnection entre les pièces de support.

2. Procédé suivant la revendication 1, dans lequel chaque pièce de support (51-51D, 52, 52E) comprend une première partie (58-58D, 59, 61-61D, 62, 62E) et une seconde partie (53-53D, 54), la dite première partie comportant l'ouverture non-circulaire (63, 64) à un emplacement à l'écart de la seconde partie, et dans lequel l'étape de fabrication comprend l'étape d'estampage de chaque pièce de support dans une plaque de métal, ladite étape d'estampage réalisant la courbure de chaque seconde partie de telle sorte que les dites secondes parties définissent substantiellement un tube (55) lorsqu'elles sont placées en relation spéculaire.

3. Procédé suivant la revendication 2, dans lequel chaque seconde partie est courbée jusqu'à une forme substantiellement semi-cylindrique, et dans lequel lesdites secondes parties sont adjacentes lorsque placées en relation spéculaire et définissent un tube substantiellement cylindrique.

4. Procédé suivant la revendication 3, comprenant, après l'étape de refoulement, l'étape consistant à placer un élément annulaire (86, 91A-91D) sur le tube substantiellement cylindrique défini par les secondes parties, le diamètre interne du dit élément annulaire étant substantiellement égal au diamètre externe du dit tube.

5. Procédé suivant la revendication 4, dans lequel l'élément annulaire est une rondelle isolante (86), et qui comprend l'étape consistant à placer la dite rondelle isolante à un emplacement sur le tube adjacent aux dites premières parties des pièces de support.

6. Procédé suivant la revendication 4, dans lequel l'étape d'estampage produit un orifice additionnel (56-56D, 57) dans la seconde partie de chaque pièce de support, dans lequel l'élément annulaire est une douille allongée (91A-91D) possédant deux orifices supplémentaires alignés dans ses côtés opposés, et comprenant l'étape consistant à aligner chacun des dits orifices supplémentaires avec un orifice additionnel respectif.

7. Procédé suivant la revendication 2, dans lequel l'étape d'estampage produit un orifice supplémentaire (56-56D, 57) dans la seconde partie de chaque pièce de support, les dits orifices supplémentaires étant alignés lorsque les pièces de support sont placées en relation spéculaire.

8. Procédé suivant la revendication 2, dans lequel la première partie de chaque pièce de support comprend une région centrale (58-58D, 59) adjacente à sa seconde partie, et une région inférieure (61-61D, 62, 62E) écartée de la dite seconde partie, l'étape d'estampage courbant la dite première partie de chaque pièce de support de telle sorte que, lorsque les pièces de support sont placées en relation spéculaire, leurs régions centrales sont évasées vers l'extérieur à l'écart l'une de l'autre dans une direction à l'écart de la seconde partie, et les régions inférieures s'étendent approximativement parallèlement l'une à l'autre.

9. Procédé suivant la revendication 8, dans lequel l'étape d'estampage est effectuée en une seule opération d'estampage.

10. Procédé suivant la revendication 1, dans lequel l'orifice non circulaire est substantiellement hexagonal.

11. Procédé suivant la revendication 1, dans lequel l'étape de fabrication comprend l'étape d'estampage de chaque pièce de support dans une plaque de métal, et, à la suite de l'étape d'estampage, les étapes de chauffage et d'étirage des dites pièces de support de manière à leur conférer une dureté Rockwell dans l'intervalle de 45 à 55 RC.

12. Support de roulette orientable, comprenant un support (46-46E) qui comprend deux pièces distinctes de support en forme de plaques (51-51D, 52, 52E), possédant chacune un orifice (63, 64, 64E); un axe (48); une roulette (47) supportée à rotation sur le dit axe, les pièces de support étant disposées de part et d'autre de la roulette et chaque extrémité (76, 77) de l'axe s'étendant au travers d'un orifice correspondant, les dites pièces de support étant alignées angulairement et maintenues à l'encontre d'un mouvement axial vis-à-vis du dit axe; et des moyens associés (63, 64, 64E, 78, 79) empêchant une rotation relative entre les pièces de support, caractérisé en ce que l'axe (47) possède des moyens définissant, adjacent à chacune de ses extrémités, un épaulement (73, 74) orienté respectivement vers l'extérieur considéré dans le sens axial, chaque pièce de support (51-51D, 52, 52E) étant disposée contre un épaulement respectif (73, 74), et en ce que les moyens associés comprennent le fait que les orifices (63, 64, 64E) dans les pièces de support sont non-circulaires, comprennent une partie refoulée (78, 79) à chaque extrémité du dit axe, et comprennent le fait que la matière du dit axe s'est répandue pour remplir les dits orifices non-circulaires dans les pièces de support au cours de la formation des dites parties refoulées, les pièces de support étant maintenues à l'encontre d'un mouvement axial et d'un mouvement de rotation l'une par rapport à l'autre et par rapport à l'axe sans aucune autre liaison entre les pièces de support, les épaulement (73, 74) et les parties refoulées (78, 79) empêchant les pièces de support (51, 52) de se déplacer axialement sur l'axe 48, et la coopération entre les orifices non-circulaires (63, 64) et les parties non-circulaires de l'axe remplissant les dits orifices non-circulaires empêchant la rotation l'une par rapport à l'autre, et par rapport à l'axe, des pièces de support alignées.

13. Support de roulette orientable suivant la revendication 12, dans lequel les pièces de support sont substantiellement l'image spéculaire l'une de l'autre et ont chacune des première (58-58D, 59, 61-61D, 62, 62E) et seconde (53-53D, 54) parties, chaque seconde partie étant substantiellement semi-cylindrique et les dites secondes parties étant adjacentes l'une à l'autre et définissant un tube (55) substantiellement cylindrique.

14. Support de roulette orientable suivant la revendication 13, qui comprend un orifice supplémentaire (56-56D, 57) dans la seconde partie de chaque pièce de support, les dits orifices supplémentaires étant alignés l'un par rapport à l'autre.

15. Support de roulette orientable suivant la revendication 14, dans lequel les orifices supplémentaires sont chacun une boutonnière (56C) s'étendant en direction axiale sur le tube cylindrique.

16. Support de roulette orientable suivant la revendication 13, dans lequel la première partie de chaque pièce de support comprend des régions centrale (58-58D, 59) et inférieure (61, 61D, 62, 62E)

qui sont respectivement adjacentes et à l'écart de leur seconde partie, les dites régions centrales étant évasées vers l'extérieur, à l'écart l'une de l'autre, dans une direction s'écartant des dites secondes parties et les dites régions inférieures étant disposées à l'écart l'une de l'autre et substantiellement parallèles l'une à l'autre, chacun des orifices (63, 64, 64E) étant formé dans la région inférieure d'une pièce de support respective, à un emplacement espacé de sa dite région centrale.

17. Support de roulette orientable suivant la revendication 16, dans lequel chaque région centrale s'élargit dans une direction à l'écart de la seconde partie, et dans lequel chaque région centrale se retrécit dans une direction à l'écart de la dite seconde partie.

18. Support de roulette orientable suivant la revendication 16, comprenant une rondelle isolante (86) agencée sur et entourant étroitement le tube à un emplacement adjacent aux régions centrales des pièces de support.

19. Support de roulette orientable suivant la revendication 16, dans lequel les bords latéraux (66, 67) des régions centrales des pièces de support sont courbées vers l'intérieur en direction l'une de l'autre, une partie des bords latéraux des dites régions centrales sur les pièces de support respectives s'aboutant l'une à l'autre.

20. Support de roulette pivotante suivant la revendication 13, comprenant une douille tubulaire allongée (91A-91D, 92A-92D) réalisée en un matériau élastique, qui est montée sur et entoure étroitement le tube, et possède deux orifices alignés formés sur ses côtés opposés, et comprenant un orifice (56A-56D) formé au travers de la seconde partie de chaque pièce de support et aligné avec un orifice correspondant dans la douille.

21. Support de roulette pivotante suivant la revendication 20, dans lequel la surface externe de la douille, la surface externe du tube et la surface interne (98A, 98C, 98D) de la douille sont, en section transversale, substantiellement de dimensions et de forme constantes sur la longueur de la dite douille.

22. Support de roulette orientable suivant la revendication 20, dans lequel la surface externe de la douille est substantiellement constante, en section transversale, sur la longueur de la dite douille, et dans lequel la surface externe du tube et la surface interne (98B) de la douille se retrécissent en section transversale dans une direction à l'écart des dites premières parties des pièces de support.

23. Support de roulette pivotante suivant le revendication 20, comprenant une paroi d'extrémité (93A-93D) qui ferme une première extrémité de la douille à l'écart des dites premières parties des pièces de support, un collet (94A-94D) s'étendant radialement vers l'extérieur, adjacent a l'extrémité de la douille à l'écart de la dite première extrémité, et un rebord annulaire (96A-96D) s'étendant axialement en direction de la dite première extrémité de la douille à partir du bord périphérique du dit collet, le dit rebord étant espacé radialement de la douille.

24. Support de roulette orientable suivant la revendication 20, dans lequel les orifices dans la douille et les orifices dans le tube sont chacun une boutonnière (56C) qui s'étend longitudinalement par rapport au tube et à la douille.

25. Support de roulette orientable suivant la revendication 20, comprenant un cadre (41) muni d'une broche (42) qui s'étend au travers des orifices dans la douille et des orifices dans le tube, et dans lequel les dimensions des orifices (56C, 56D) dans la douille et le tube sont supérieures aux dimensions de la broche.

26. Support de roulette orientable suivant la revendication 12, dans lequel les pièces de support sont chacune faites à partir de plaques d'acier ayant une dureté Rockwell dans la gamme de 48-50 RC.

27. Support de roulette orientable suivant la revendication 12, dans lequel chaque orifice noncirculaire est substantiellement hexagonal.

28. Support de roulette orientable suivant les revendications 12 ou 26, comprenant des paliers (71) supportant à rotation la roulette sur l'axe entre les pièces de support, et deux pare-poussière (72E) prévus de part et d'autre de la dite roulette pour protéger les dits paliers, chacun étant en contact à glissement avec une pièce de support respective, chacun des pare-poussière étant monté à rotation sur l'axe par rapport au support, mais étant normalement maintenu à l'encontre d'une telle rotation relative par engagement à friction avec le dit support, et un des pare-poussière possédant des moyens définissant une région (102) qui est alignée approximativement radialement avec le palier et qui est écartée d'une distance prédéterminée de l'axe, ce dit pare-poussière pouvant être manuellement amené à pivoter par rapport à la pièce de support à laquelle il est associé entre une première position dans laquelle la dite région du pare-poussière est visible et accessible de l'extérieur et une seconde position dans laquelle cette région est fermement disposée contre une surface interne de la pièce de support et la pièce de support fait obstruction à son accès à partir de l'extérieur.

29. Support de roulette pivotante suivant la revendication 28, comprenant des moyens pour favoriser le percement de la dite région du dit pare-poussière pour y produire une ouverture (103), la dite ouverture permettant un accès à partir de l'extérieur aux paliers lorsque le pare-poussière est dans la première position et étant fermée par la pièce de support associée lorsque le pare-poussière est dans la seconde position.

30. Support de roulette pivotante suivant la revendication 29, comprenant une partie annulaire susceptible d'être percée sur le dit pare-poussière, concentrique par rapport au dit axe, la dite région étant une partie de la dite partie annulaire.

31. Support de roulette orientable suivant la revendication 28, dans lequel la dite région du pare-poussière possède une ouverture (103) qui permet un accès à partir de l'extérieur au palier lorsque le dit pare-poussière est dans la première position, et qui est fermée par la pièce de support associée lorsque le pare-poussière est dans la seconde position.

32. Support de roulette pivotant suivant le revendication 28, qui comprend une ouverture (105) dans la pièce de support associée, la dite région du pare-poussière étant alignée avec et accessible de l'extérieur par la dite ouverture lorsque le pare-poussière est dans la première position.

FIG. 1

FIG. 2

FIG. 3

FIG. 6

FIG. 4    FIG. 5

FIG. 14
PRIOR ART

FIG. 7

FIG. 8

FIG. 11

FIG. 12

FIG. 9

FIG. 10

FIG. 13